# EUROPÄISCHE PATENTSCHRIFT

(11) **EP 0 311 965 B1**
(45) Veröffentlichungstag und Bekanntmachung des Hinweises auf die Patenterteilung: **03.02.1993**
(21) Anmeldenummer: 88116830.6
(22) Anmeldetag: 11.10.1988
(51) Int. Cl.: F16K 11/16, F15B 13/04, F16J 10/02

(54) **Steuerventil zur Betätigung und Positionierung eines Kolbens eines doppeltwirkenden Druckzylinders**
Control valve for actuating and positioning a piston of a double-acting pression cylinder
Vanne pilote pour la commande et le positionnement d'un piston d'un cylindre de pression à double effet

(30) Priorität: 16.10.1987 DE 8713904 U
(43) Veröffentlichungstag der Anmeldung: 19.04.1989
(73) Patentinhaber: Reiplinger, Günter, D-54669 Bollendorf (DE)
(72) Erfinder: Reiplinger, Günter, D-54669 Bollendorf (DE)
(74) Vertreter: Schönherr, Wolfgang

(56) Entgegenhaltungen:
- FR-A- 1 501 820
- US-A- 2 569 598
- US-A- 2 691 990

## Beschreibung

Die Erfindung betrifft ein Steuerventil zur Betätigung und Positionierung eines Kolbens eines doppelwirkenden Druckzylinders, bestehend aus einem Gehäuse, aus zwei im Gehäuse angeordneten Belüftungssitzventilen, aus zwei im Gehäuse angeordneten Entlüftungssitzventilen und aus einem im Gehäuse schwenkbar um eine Schwenkachse gelagerten, von Hand oder Fuß betätigbaren zweiarmigen Hebel zur gleichzeitigen Steuerung eines Belüftungssitzventiles und des jeweils zugeordneten Entlüftungssitzventiles.

Derartige Steuerventile dienen zur Positionierung und zum Festhalten von Kolben doppeltwirkender Druckzylinder in jeder beliebigen Stellung, da sie in Ruhestellung den Kolben unter Druck eingespannt halten.

Bei einem derartigen bekannten Steuerventil sind die Be- und Entlüftungssitzventile in einer Reihe liegend im Abstand nebeneinander angeordnet. Zur Steuerung eines Belüftungssitzventiles zusammen mit dem jeweils zugeordneten Entlüfungssitzventil sind zwei Hilfssteuerventile vorgesehen, deren Stößel über einen zweiarmigen Hebel betätigt werden. Dieses bekannte Steuerventil ist wegen seines komplizierten Aufbaus nicht nur sehr störanfällig, sondern nur mit großen Kosten herstellbar.

Aus der US-A-2 569 598 ist ein gattungsgemäßes Steuerventil bekannt, bei dem die Belüftungssitzventile und die Entlüftungssitzventile in radialer Richtung zu der Schwenkachse des Betätigungshebels angeordnet sind. Der Betätigungshebel ist bei diesem aus der US-A-2 569 598 bekannten Steuerventil ovalförmig ausgebildet. Bei einer Betätigung des Steuerhebels um 45° gleiten die Ventilstößel der Belüftungssitzventile und der Entlüfungssitzventile auf dem Umfang des ovalförmigen Steuerhebels, so daß die Ventilstößel ständig am Umfang anliegen.

Wegen der hohen zu steuernden Drucke wirkt eine erhebliche Kraft auf die Ventilstößel, so daß die zwischen Steuerhebel und Ventilstößel auftretende Reibung relativ groß ist. Dadurch ist eine genaue Positionierung des Kolbens des doppeltwirkenden Druckzylinders nur sehr schwierig möglich. Nachteilig ist außerdem, daß durch die auftretende Reibung die Gefahr besteht, daß der Steuerhebel in einer Stellung blockiert, so daß keine Totmannschaltung gegeben ist.

Die Aufgabe der Erfindung besteht daher darin, ein Steuerventil der eingangs genannten Art vorzuschlagen, das bei einfacher Bauweise kostengünstig herstellbar ist und eine stets sichere Betätigung und Positionierung eines Kolbens eines doppeltwirkenden Druckzylinders gewährleistet.

Diese Aufgabe wird gelöst durch die Merkmale gemäß Hauptanspruch. Dadurch, daß die Ventile mit ihren Ventilstößeln in Ebenen rechtwinklig zur Symmetrieebene angeordnet sind, erfolgt die Bewegung der Ventilstößel auch in dieser Richtung. Die dabei zwischen Hebel und Ventilstößel auftretende Reibung ist äußerst gering, da die Bewegung des Hebels im wesentlichen gleichfalls in Richtung senkrecht zur Symmetrieebene erfolgt und der Hebel nur wenig auf den Ventilstößeln gleitet. Die Anordnung der Ringflächen an den Ventilstößeln gleicht einen Teil des hohen Druckes aus, so daß die Ventile leicht zu bedienen sind.

Vorteilhaft ist die Ringfläche der Ventilstößel kegelförmig ausgebildet. Vorzugsweise ist die Ringfläche ca. 25% größer als die Ventilsitzfläche des Ventilstößels ausgebildet.

Vorteilhaft besteht das Gehäuse aus zwei zur Symmetrieebene spiegelsymmetrischen Gehäusehälften. Vorzugsweise sind in beiden Gehäusehälften spiegelsymmetrische Aus- bzw. Eintrittsöffnungen angeordnet, die mit zugeordneten Be- und Entlüftungskanälen in den Gehäusehälften in Verbindung stehen.

Vorteilhaft sind in die Ein- bzw. Austrittsöffnungen Kuppelstücke, Reduzierstücke mit verringertem Innendurchmesser, Stopfen od.dgl. einsetzbar.

Vorzugsweise sind die den Ventilstößelenden der Sitzventile zugeordneten Endabschnitte des zweiarmigen Hebels abgeschrägt ausgebildet.

Die Erfindung ist in den Zeichnungen beispielhaft dargestellt. Es zeigen:
- Fig. 1: ein erfingungsgemäßes Steuerventil im Schnitt in Ruhestellung und
- Fig. 2: das Steuerventil im Schnitt in einer Betriebsstellung.

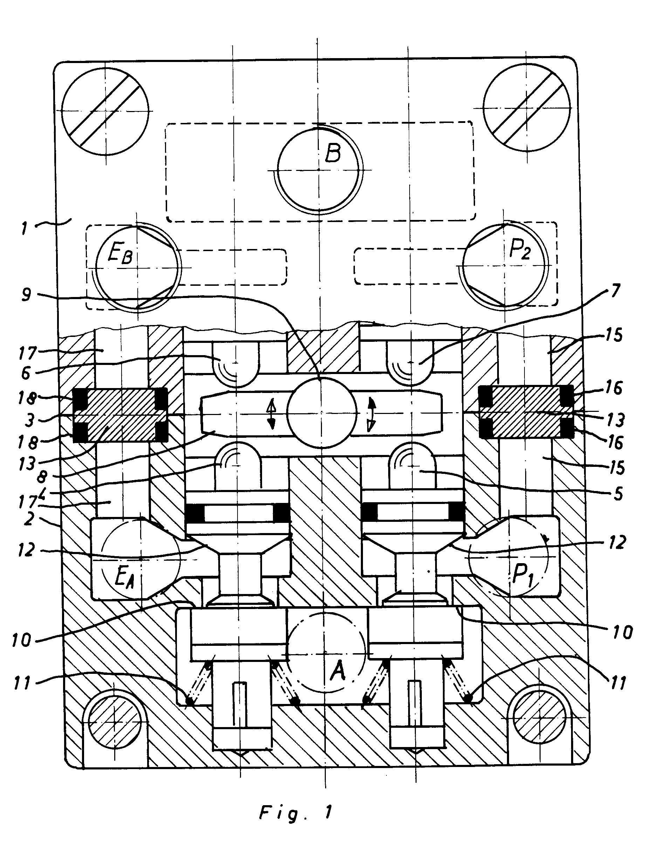

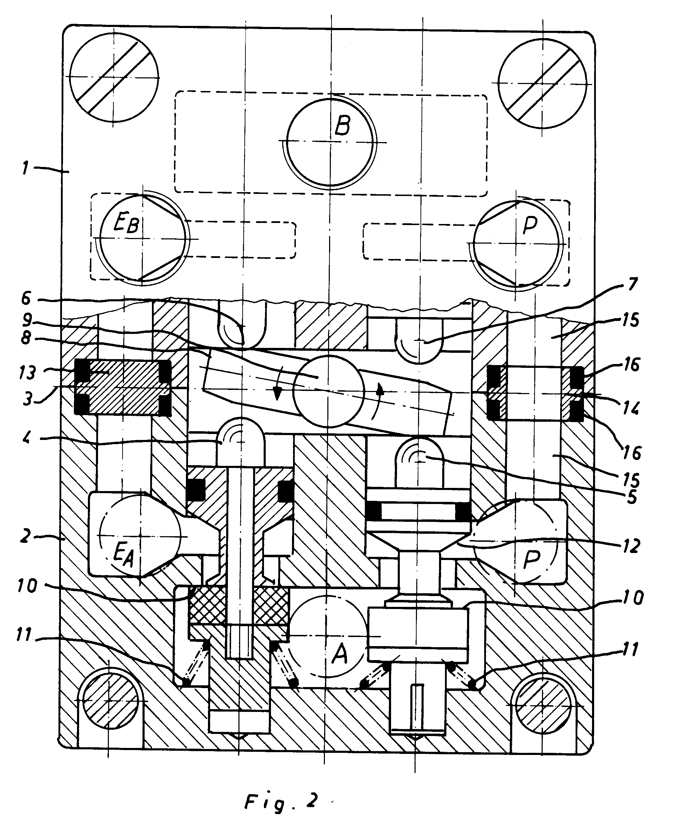

Nach den Fig. 1 und 2 besteht ein Steuerventil aus zwei Gehäusehälften 1 und 2, die zu der mit 3 bezeichneten Symmetrieebene spiegelsymmetrisch ausgebildet sind.

In jeder Gehäusehälfte 1 bzw. 2 sind nebeneinander, in einer rechtwinklig zur Symmetrieebene 3 verlaufenden Ebene jeweils im Abstand zueinander zwei Sitzventile angeordnet, die mit ihren Ventilstößelenden 4, 5 bzw. 6, 7 spiegelsymmetrisch zur Symmmetrieebene 3 liegen. Ein zweiarmiger Hebel 8 ist um die in der Symmetrieebene 3 liegende Schwenkachse 9 schwenkbar gelagert und wirkt mit seinen abgeschrägten Hebelenden mit den Ventilstößeln 4 bis 7 zusammen.

Durch die Abschrägung wird, wie dies die Fig. 2 zeigt, gewährleistet, daß der Hebel 8 in seinen Endstellungen flächig mit den Abschrägungen im Gehäuse anschlägt, so daß die Ventile entlastet werden.

Der Hebel 8 wird über einen nichtgezeigten Betätigungsgriff, eine Fußwippe o.dgl. von Hand oder durch den Fuß bedient.

Wie die Fig. 1 und 2 weiter zeigen, haben die Ventilstößel 4 und 5 Ventilsitzflächen 10, die in Ruhestellung eine mit A bezeichnete Druckkammer gegen eine mit P1 bezeichnete Belüftungsdruckkammer und eine mit EA bezeichnete Entlüftungskammer abschließen. In gleicher Weise tragen die Ventilstößel 6 und 7 Ventilflächen, die eine mit B bezeichnete Druckkammer in Ruhestellung gegenüber einer mit P2 bezeichneten Belüftungsdruckkammer und einer mit EB bezeichneten Entlüftungsdruckkammer abschließen. Die Ventilstößel 4 bis 7 sind von vorgespannten Federn 11 in Ruhestellung gehalten. (Fig. 1).

Wie die Figuren weiter zeigen, tragen die Ventilstößel 4 und 5, ebenso wie die Ventilstößel 6 und 7, im Abstand zu ihrer Ventilsitzfläche 10 eine entgegengesetzt angeordnete, kegelförmige Ringfläche 12, deren Fläche ca. 25% größer ausgebildet ist als die Ventilsitzfläche 10.

Die Belüftungsdruckkammern P1 und P2 sind mit Belüftungskanälen 15 verbunden, die in spiegelsymmetrisch zur Symmetrieebene 3 angeordneten Eintrittsöffnungen 16 enden. In gleicher Weise sind die Entlüftungskammern EA und EB mit Entlüftungskanälen 17 verbunden, die in symmetrisch zur Symmetrieebene 3 angeordneten Austrittsöffnungen 18 enden.

Nach Fig. 1 ist in die Eintrittsöffnungen 16 und in die Austrittsöffnungen 18 jeweils ein Stopfen 13 eingesetzt, so daß die Belüftungskanäle 15 und die Entlüftungskanäle 17 der beiden Gehäusehälften 1 und 2 voneinander getrennt sind. Somit können die Belüftungsdruckkamern mit unterschiedlichen Druckquellen verbunden werden, so daß in den Belüftungsdruckkammern P1 und P2 unterschiedliche Drucke herrschen.

Nach Fig. 2 ist in die Eintrittsöffnungen 16 der beiden Gehäusehälften 1 und 2 ein Kuppelstück 14 eingesetzt, so daß die Belüftungskanäle 15 der beiden Gehäusehälften miteinander verbunden sind und in den beiden Belüftungsdruckkammern der beiden Gehäusehälften 1 und 2 der gleiche Druck P herrscht.

Nach den Fig. 1 und 2 sind die Belüftungsdruckkammern P1, P2 bzw. P mit nichtgezeigten Belüftungsdruckquellen verbunden. Dadurch daß die Ringflächen 12 größer als die Ventilfächen 10 sind, werden durch die angelegten Drucke P1, P2 bzw. P die Ventilstößel der Belüftungssitzventile 5 und 7 in Schließstellung bewegt und unterstützen so die Wirkung der vorgespannten Federn 11.

Die Druckkammer A ist mit der einen Seite eines nichtgezeigten Druckzylinders verbunden, während die Druckkammer B mit der anderen Seite des nichtgezeigten Druckzylinders verbunden ist.

Die Ventilstößel 4 und 6 der Entlüftungssitzventile werden gleichfalls von den Federn 11 in Schließstellung gehalten, so daß der in den Druckkammern A und B vorhandene Druck nicht durch die Entlüftungskammern EA bzw. EB entweichen kann.

Wird der Hebel 8 betätigt, wie beispielsweise in Fig. 2 gezeigt ist, so wird einerseits der Ventilstößel eines Belüftungssitzventiles, nach Fig. 2 der Ventilstößel 5, und andererseits der Ventilstößel des zugeordneten Entlüftungsventils, nach Fig. 2 der Ventilstößel 6, betätigt.

Dadurch wird der Druckkammer A über die Belüftungskammer P bzw. P1 Druck zugeführt, während die Druckkammer B über die Entlüftungskammer EB entlüftet wird. Somit ergibt sich eine entsprechende Bewegung des nichtgezeigten Kolbens. Wird der Hebel 8 in die entgegengesetzte Richtung wie in Fig. 2 geschwenkt, so wird der Druckkolben in die entgegengesetzte Richtung bewegt.

In Ruhestellung des Hebels 8 nach Fig. 1 wirken die in den Druckkammern A und B aufgebauten Drucke auf die Ventilstößel 4 bis 7, so daß diese Ventile als Rückschlagventile wirken und eine Bewegung des nichtgezeigten Kolbens verhindern. Durch die Drucke P, P1 bzw. P2 wird diese Wirkung noch verstärkt.

Durch den Einsatz von Stopfen 13 in die Eintrittsöffnungen 16 bzw. die Auftrittsöffnungen 18 kann mit unterschiedlichen Belüftungs- und
Entlüftungsdrucken gearbeitet werden, so daß sich unterschiedliche Geschwindigkeiten ergeben. Dies kann gleichfalls auch durch den Einsatz von Kuppelstücken 14 oder Reduzierstücken mit verringertem Innendurchmesser in die Eintrittsöffnungen 16 bzw. Austrittsöffnungen 18 erreicht werden.

## Patentansprüche

1. Steuerventil zur Betätigung und Positionierung eines Kolbens eines doppeltwirkenden Druckzylinders, bestehend aus einem Gehäuse (1, 2), aus zwei im Gehäuse angeordneten Belüftungssitzventilen (5, 7) und zwei im Gehäuse angeordneten Entlüftungssitzventilen (4, 6) und aus einem im Gehäuse schwenkbar um eine Schwenkachse (9) gelagerten, von Hand oder Fuß betätigbaren zweiarmigen Hebel (8) zur gleichzeitigen Steuerung eines Belüftungssitzventiles und des jeweils zugeordneten Entlüftungssitzventiles, dadurch gekennzeichnet, daß die Belüftungssitzventile und die Entlüftungssitzventile sich jeweils spiegelsymmetrisch zu der durch die Längsachse des Hebels in seiner Ruhestellung und durch die Schwenkachse des Hebels bestimmten Symmetrieebene (3) im Gehäuse in rechtwinklig zur Symmetrieebene verlaufenden Ebenen gegenüberliegend angeordnet sind, derart daß dem einen Belüftungssitzventil (5 bzw. 7) das Entlüftungssitzventil (4 bzw. 6) des anderen Belüftungssitzventiles benachbart ist, und wobei die Ventilstößel der Belüftungssitzventile (5, 7) im Abstand zu ihrer Ventilsitzfläche (10) eine entgegengesetzt angeordnete Ringfläche (12) tragen, die vom Belüftungsdruck beaufschlagbar ist und die größer als die Ventilsitzfläche des Ventilstößels (5 bzw. 7) ausgebildet ist.

2. Steuerventil nach Anspruch 1, dadurch gekennzeichnet, daß die Ringfläche (12) der Ventilstößel (5) bzw. (7) kegelförmig ausgebildet ist.

3. Steuerventil nach Anspruch 1 oder 2, dadurch gekennzeichnet, daß die Ringfläche (12) ca. 25% größer als die Ventilsitzfläche (10) des Ventilstößels (5) bzw. (7) ausgebildet ist.

4. Steuerventil nach einem der Ansprüche 1 bis 3, dadurch gekennzeichnet, daß das Gehäuse aus zwei zur Symmetrieebene (3) spiegelsymmetrischen Gehäusehälften (1, 2) besteht.

5. Steuerventil nach Anspruch 4, dadurch gekennzeichnet, daß in beiden Gehäusehälften (1, 2) spiegelsymmetrische Aus- bzw. Eintrittsöffnungen (18, 16) angeordnet sind, die mit zugeordneten Be- und Entlüftungskanälen (15, 17) in den Gehäusehälften (1, 2) in Verbindung stehen.

6. Steuerventil nach Anspruch 5, dadurch gekennzeichnet, daß in die Ein- bzw. Austrittsöffnungen (16, 18) Kuppelstücke (14), Reduzierstücke mit verringertem Innendurchmesser, Stopfen (13) od.dgl. einsetzbar sind.

7. Steuerventil nach Anspruch 1 bis 6, dadurch gekennzeichnet, daß die den Ventilstößelenden (4 bis 7) der Sitzventile zugeordneten Endabschnitte des zweiarmigen Hebels (8) abgeschrägt ausgebildet sind.

## Claims

1. Control valve for operating and positioning a piston of a double-action pressure cylinder, comprising a housing (1, 2), two air-intake seat valves (5, 7) arranged in the housing and two air-outlet seat valves (4, 6) arranged in the housing, and a hand- or foot operated two-armed lever (8), which is mounted in the housing so as to be pivotable around a pivot axis (9), for simultaneous control of an air-intake seat valve and a respective associated air-outlet seat valve, **characterised in that** the air-inlet seat valves and the discharge seat valves are arranged in the housing and mirror-symmetrically to a plane of symmetry (3) which is determined by the longitudinal axis of the lever in its inoperative position and by the pivot axis of the lever, arranged opposite each other in planes extending at right angles to the symmetry plane, so that the one air-intake seat valve (5 or 7) is adjacent to the air-outlet seat valve (4 or 6) of the other air-intake seat valve, and wherein the valve tappets of the air-intake seat valves (5, 7) have, at a distance from their valve seat surface (10̸), an oppositely arranged circular surface (12) which is loaded by air-intake pressure and which is arranged to be larger than the valve-seat surface of the valve tappet (5 or 7).

2. Control valve according to claim 1, **characterised in that** the circular surface (12) of the valve tappets (5) or (7) respectively are arranged to be conical.

3. Control valve according to claim 1 or 2, **characterised in that** the circular surface (12) is approximately 25% larger than the valve-seat surface (10̸) of the valve tappet (5) or (7) respectively.

4. Control valve according to one of claims 1 to 3, **characterised in that** the housing comprises two housing halves (1, 2) which are mirror-symmetrical relative to the plane of symmetry (3).

5. Control valve according to claim 4, **characterised in that** the two housing halves (1, 2) include mirror-symmetrical outlet and inlet apertures (18, 16), which are connected to associated air-intake and air-outlet channels (15, 17) in the housing halves (1, 2).

6. Control valve according to claim 5, **characterised in that** coupling elements (14), reducers with reduced inside diameter, plugs (13) or the like can be inserted into the inlet and outlet apertures (16, 18).

7. Control valve according to claim 1 to 6, **characterised in that** the end sections of the two-armed lever (8), which are associated with the valve-tappet ends (4 to 7) of the seat valves, are tapered.

## Revendications

1. Vanne-pilote pour la commande et le positionnement du piston d'un vérin pneumatique à double effet, se composant d'un boîtier (1, 2), de deux soupapes à siège pour l'arrivée d'air (5, 7) placées dans le boîtier et de deux soupapes à siège pour l'évacuation d'air (4, 6) placées dans le boîtier et d'un levier à deux bras (8) monté dans le boîtier de manière à pivoter autour d'un axe de pivotement (9) et actionnable à la main ou au pied pour une commande simultanée d'une soupape à siège pour l'arrivée d'air et de la soupape à siège pour l'évacuation d'air chaque fois associée, caractérisée en ce que les soupapes d'arrivée d'air et les soupapes d'évacuation d'air sont disposées chaque fois symétriquement par rapport au plan de symétrie (3) défini par l'axe longitudinal du levier dans sa position de repos et par l'axe de pivotement du levier dans le boîtier, de manière opposée dans des plans qui s'étendent perpendiculairement au plan de symétrie, de telle manière que la soupape d'évacuation d'air (4 ou 6) de l'autre soupape d'arrivée d'air est adjacente à une soupape d'arrivée d'air (5 ou 7), les poussoirs des soupapes d'arrivée d'air (5, 7) portant par une surface annulaire (12) opposée et distante de leur surface de contact (10), cette surface annulaire pouvant être sollicitée par la pression d'arrivée d'air et étant conçue plus grande que la surface de contact du poussoir (5 ou 7).

2. Vanne-pilote selon la revendication 1, caractérisée en ce que la surface annulaire (12) du poussoir de soupape (5 ou 7) est conçue de forme conique.

3. Vanne-pilote selon la revendication 1 ou 2, caractérisée en ce que la surface annulaire (12) est conçue plus grande d'environ 25% que la surface de contact (10) du poussoir de soupape (5 ou 7).

4. Vanne-pilote selon l'une quelconque des revendications 1 à 3, caractérisée en ce que le boîtier se compose de deux demi-pièces (1, 2) symétriques par rapport au plan de symétrie (3).

5. Vanne-pilote selon la revendication 4, caractérisée en ce que, dans les deux demi-boîtiers (1, 2) sont disposés des orifices d'évacuation ou d'admission (18, 16) qui communiquent avec des passages d'arrivée d'air et d'évacuation d'air (15, 17) ménagés dans les demi-boîtiers (1, 2) et qui sont symétriques.

6. Vanne-pilote selon la revendication 5, caractérisée en ce que des raccords (14), des raccords réducteurs avec diamètre intérieur réduit, des tampons (13) ou autres éléments semblables peuvent être introduits dans les orifices d'admission ou d'évacuation (16, 18).

7. Vanne-pilote selon l'une quelconque des revendications 1 à 6, caractérisée en ce que les parties d'extrémité du levier à deux bras (8) associées aux extrémités de poussoir de soupape (4 à 7) des soupapes à siège sont en forme de biseau.
